# EUROPÄISCHE PATENTSCHRIFT

(11) **EP 2 230 160 B1**
(45) Veröffentlichungstag und Bekanntmachung des Hinweises auf die Patenterteilung: **18.09.2019**
(21) Anmeldenummer: 10156603.2
(22) Anmeldetag: 16.03.2010
(51) Int. Cl.: B62D 55/065, B62D 55/30

(54) **Strassenbaumaschine, Kettenlaufwerk einer Strassenbaumaschine, sowie Verfahren zum Spannen einer Kette eines Kettenlaufwerkes**
Street construction machine, caterpillar drive for it and method for tensioning the caterpillar
Engin de construction de chaussées, chaîne d'un tel engin et procédé de mise sous tension de la chaîne

(30) Priorität: 20.03.2009 DE 102009013708
(43) Veröffentlichungstag der Anmeldung: 22.09.2010
(73) Patentinhaber: Wirtgen GmbH, 53578 Windhagen (DE)
(72) Erfinder: Busley, Peter, 53545 Linz/Rhein (DE); Frank, Burkhard, 53560 Vettelschoß (DE); Barimani, Cyrus, 53639 Königswinter (DE); Hähn, Günter, 53639 Königswinter (DE)
(74) Vertreter: dompatent von Kreisler Selting Werner - Partnerschaft von Patent- und Rechtsanwälten mbB

(56) Entgegenhaltungen:
- DE-U1- 9 310 662
- FR-A- 1 550 008
- JP-A- H0 872 761
- US-A- 5 005 920

## Beschreibung

Die Erfindung betrifft ein Kettenlaufwerk für eine Straßenbaumaschine nach dem Oberbegriff des Anspruchs 1, eine Straßenbaumaschine, insbesondere eine Straßenfräsmaschine, nach dem Oberbegriff des Anspruchs 1, sowie ein Verfahren zum Spannen einer Kette eines Kettenlaufwerkes nach dem Oberbegriff des Anspruchs 10.

Kettenfahrzeuge weisen ein den Maschinenrahmen tragendes Fahrwerk mit mehreren Kettenlaufwerken auf.

Ein Kettenlaufwerk weist folgende Elemente auf:
- eine Kette mit einem oberen und einem unteren Trum aus Metall oder mit zusätzlichen Bodenplatten für den Straßenbetrieb,
- ein Antriebsrad, welches das Drehmoment eines Antriebsmotors auf die Kette überträgt,
- ein Leitrad, das vorzugsweise mit einer Stelleinrichtung versehen ist, mit der der gegenseitige Abstand der Achsen des Antriebs- und Leitrades zur Anpassung an eine aktuelle Länge der Kette einstellbar ist,
- Laufrollen, die den Maschinenrahmen tragen und auf der Kette abrollen,
- eventuell zusätzliche Stützrollen, die den Rücklauf des oberen Trums der Kette unterstützen,
wobei zusätzlich zu der Stelleinrichtung ein Federelement vorgesehen sein kann, das ausgehend von dem eingestellten Abstand zwischen den Achsen des Antriebs- und Leitrades eine Verkürzung des Abstandes gegen die Federkraft bei einer betriebsbedingten Erhöhung der Kettenspannung zur Vermeidung von Spannungsspitzen in der Kette zulässt.

Bei einem Kettenlaufwerk befindet sich das Antriebsrad normalerweise in Fahrtrichtung in der hinteren Position, so dass der untere Trum der Kette auf Zug beansprucht wird. Dabei verursacht die Umlenkung der Kette unter Last einen erhöhten Verschleiß der Kette.

Um die erforderliche Kettenspannung einzustellen, die einerseits einen geringen Kettenverschleiß ermöglicht und andererseits ein Abspringen der Kette verhindert, ist es bisher bekannt, eine Kettenspanneinrichtung aus einem Fettspanner in Kombination mit einem Federelement zu verwenden. Das Federelement ermöglicht eine Verkürzung des Abstandes zwischen den Achsen des Antriebs- und Leitrades bei einer betriebsbedingten Erhöhung der Kettenspannung zur Vermeidung von Spannungsspitzen in der Kette. Der Fettspanner verwendet im wesentlichen inkompressibles Fett und dient dazu, zur Anpassung an eine aktuelle Länge der Kette den gegenseitigen Abstand der Achsen des Antriebs- und Leitrades einzustellen. Dies bedeutet, dass wenn sich die Kette gelängt hat, eine Kompensation der Längenänderung über den Fettspanner erfolgt, wobei zunächst der Durchhang der Kette festgestellt wird und dann über den Fettspanner manuell Fett zugeführt wird, bis die Kette einen gewünschten Durchhang aufweist.

Nachteilig ist dabei, dass diese Einstellarbeiten manuell erfolgen und an jedem Kettenlaufwerk eines Kettenfahrzeuges einzeln durchgeführt werden müssen, womit ein erheblich Zeitverlust verbunden ist.

Nachteilig ist dabei auch, dass diese manuelle Wartungsarbeiten häufig zu selten oder auch zu oft durchgeführt werden.

Wenn die Wartungsarbeiten zu selten erfolgen, besteht die Gefahr, dass die Kette abspringen kann oder zu stark verschleißen kann. Werden die Wartungsarbeiten zu häufig durchgeführt, ist der damit verbundene Zeitverlust nachteilig. Abgesehen davon, besteht auch die Gefahr bei der manuellen Durchführung der Wartungsarbeiten, dass beim Messen des Kettendurchhangs häufig Fehler gemacht werden.

Eine andere Möglichkeit steht darin, die Kettenspannung beispielsweise rein hydraulisch zu steuern, wobei in solchen Systemen in der Regel kein zusätzliches Federelement vorgesehen ist. Eine Kolben-Zylindereinheit hält die Kette ständig gespannt. Überfährt das Kettenlaufwerk ein Hindernis, (als ein Beispiel für eine betriebsbedingte Erhöhung der Kettenspannung) dann kann ein mit dem Zylinder der Kolben-Zylinder-Einheit verbundenes Druckbegrenzungsventil Druck ablassen, wobei der Kolben einfährt.

Nachteilig ist dabei, dass durch die permanente relativ hohe Kettenspannung eine Erhöhung des Kettenverschleißes eintritt. Der hohe Verschleiß entsteht dadurch, dass ständig ein erhöhter Speisedruck zur Verfügung stehen muss, der nach dem Einfedern durch eine betriebsbedingte Erhöhung der Kettenspannung wieder für das Ausfahren des Kolbens sorgt. Auch besteht ein Problem bei Rückwärtsfahrt, da beim Einfedern des Leitrades die Kette leicht abspringen kann. Bei Rückwärtsfahrt erstreckt sich die Kettenspannung über den oberen Trum der Kette und über das Leitrad und baut sich erst an der Unterseite im unteren Trum ab. Wird dann durch eine Überlastsituation durch das Druckbegrenzungsventil Druck abgelassen, besteht die Gefahr, dass die Kette abspringt.

Aus der DE 102 57 405 A1 ist ein Kettenspannsystem für eine Kette eines Kettenlaufwerkes beschrieben, mit dem eine relativ hohe Kettenspannung bei einem Bagger während des Arbeitsvorgangs aufrechterhalten wird. Dadurch wird verhindert, dass der Bagger auf der Kette während des Arbeitseinsatzes nach hinten oder nach vorne rollt.

Wird dagegen der Bagger nur verfahren, ohne im Arbeitseinsatz zu sein, wird die Kettenspannung reduziert, um den Verschleiß am Kettenlaufwerk zu reduzieren.

Aus der US 5,005,920 (D1) ist ebenfalls ein Kettenspannsystem bei einem Baufahrzeug, wie einer Planierraupe oder einem Bagger bekannt, bei dem eine relativ hohe Kettenspannung während des Arbeitsvorgangs aufrechterhalten werden muss, um zu verhindern, dass sich das Baufahrzeug auf der Kette während des Arbeitseinsatzes vor- und zurückbewegt.

Wird das Baufahrzeug nur verfahren, ohne im Arbeitseinsatz zu sein, wird die Kettenspannung reduziert, um den Verschleiß am Kettenlaufwerk zu reduzieren.

Hierzu ist vorgesehen, in einer ersten Betriebsart, die Stelleinrichtung mit einem hohen Betriebsdruck zu beaufschlagen und in einer zweiten Betriebsart die Stelleinrichtung mit einem niedrigen Betriebsdruck zu beaufschlagen. Die Wahl der Betriebsart erfolgt durch den Maschinenführer manuell über das Schaltventil.

Auch bei der JP 8-72761 ist lediglich eine Stelleinrichtung beschrieben, bei der mit einem in der Kabine des Baufahrzeugs befindlichen Steuerventil die Spannung der Kette in Abhängigkeit von den Arbeitsbedingungen manuell eingestellt werden kann, und zwar. Die Entgegenhaltung zielt ebenfalls darauf ab, die Unterhaltskosten zu reduzieren, indem die Kettenspannung im Arbeitsbetrieb höher eingestellt wird als im reinen Fortbewegungsbetrieb.

Demzufolge ist bei beiden Entgegenhaltungen nicht vorgesehen, die Bandspannung automatisch einzustellen.

Der Erfindung liegt die Aufgabe zugrunde, ein Kettenlaufwerk, eine Straßenbaumaschine mit einer Kettenspanneinrichtung, sowie ein Verfahren zum Spannen einer Kette eines Kettenlaufwerks zu schaffen, mit denen ein gewünschter Durchhang des oberen Trums der Kette ohne Wartungsarbeit an den Kettenlaufwerken automatisch einstellbar ist.

Zur Lösung dieser Aufgabe dienen die Merkmale des Anspruchs 1 bzw. 10.

Die Erfindung sieht in vorteilhafter Weise vor, dass eine Steuereinrichtung zum automatischen Einstellen eines gewünschten Durchhangs der Kette in dem oberen Trum die Sperreinrichtung automatisch in Abhängigkeit von den Steuersignalen eines Abstandssensors für den Abstand zwischen dem oberen Trum und dem Fahrwerksrahmen und/oder eines Wegsensors für die Position des Kolbens in dem Zylinder und/oder eines Drucksensors für den Druck oder die Druckänderung im Zylinder der Stelleinrichtung und/oder eines Kraftsensors für die Kolbenkraft ansteuert. Die Stelleinrichtung besteht aus einer Kolben-Zylinder-Einheit, die mit einem vorzugsweise hydraulischen Arbeitsdruck beaufschlagbar ist, um eine vorbestimmte Kraft des Kolbens zu erzeugen, wobei eine Sperreinrichtung in Abhängigkeit von der Ansteuerung durch die Steuereinrichtung die erreichte Endposition des Kolbens der Kolben-Zylinder-Einheit unter dem anliegenden Arbeitsdruck automatisch arretiert.

Die Erfindung ermöglicht es, vor einem Arbeitseinsatz der Baumaschine einen gewünschten Durchhang der Kette in ihrem oberen Trum automatisch einzustellen, indem eine einer bestimmten Kettenspannung zugeordnete Kolbenkraft der Stelleinrichtung erzeugt wird und indem die Endposition des Kolbens durch die Sperreinrichtung auf Dauer arretiert wird. Dadurch wird der gegenseitige Abstand der Achsen des Antriebs- und Leitrades an eine aktuelle Länge der Kette angepasst und fest eingestellt, wobei die Arbeitsweise des seriell zu der Stelleinrichtung wirkenden Federelementes nicht beeinträchtigt wird.

Vorzugsweise wird beim Erreichen einer zu der Kraft des Kolbens im wesentlichen gleich hohen Gegenkraft zwischen den Achsen des Antriebs- und Leitrades die erreichte Endposition des Kolbens arretiert. Alternativ kann die erreichte Endposition des Kolbens auch nach einem vorbestimmten Zeitablauf ab der Druckbeaufschlagung der Stelleinrichtung oder nach dem Erreichen eines vorgegebenen Durchhangs der Kette im oberen Trum arretiert werden.

Die Einstellung der Kettenspannung bzw. des Durchhangs kann bei jeder Betriebsunterbrechung oder Stillstand der Maschine, bei jedem erstmaligen Betriebsstart an einem Tag oder auch in kleineren und größeren Zeitabständen erfolgen.

Auch kann vorgesehen sein, dass die Einstellung der Kettenspannung bzw. des Durchhangs automatisiert wird und nach jeder Betriebsunterbrechung oder Stillstand der Maschine eventuell in Verbindung mit dem Ablauf vorbestimmter Zeitabstände, oder bei jedem erstmaligen Betriebsstart erfolgt.

Vorzugsweise ist vorgesehen, dass das vorgespannte Federelement zwischen dem Kolben der Kolben-Zylinder-Einheit und der Achse des Antriebs- oder Leitrades angeordnet ist. Bei diesem Ausführungsbeispiel ist vorgesehen, dass das Federelement zwischen dem nach der Einstellung der Kettenspannung unbeweglichen Kolben der Stelleinrichtung und der Achse des Antriebsrades oder vorzugsweise des Leitrades angeordnet ist.

Bei einem bevorzugten Ausführungsbeispiel ist vorgesehen, dass die Stelleinrichtungen aller Kettenlaufwerke mit dem gleichen vorbestimmten Arbeitsdruck beaufschlagt sind. Dadurch wird gewährleistet, dass alle Kettenlaufwerke mit der gleichen Kettenspannung und mit dem gleichen gewünschten Durchhang betrieben werden.

Die Zylinder der Stelleinrichtungen aller Kettenlaufwerke können jeweils unabhängig voneinander einen Druckspeicher aufweisen, der den aufgebrachten Arbeitsdruck bereithält.

Es kann auch vorgesehen sein, dass die Zylinder der Stelleinrichtungen aller Kettenlaufwerke untereinander verbunden sind. Dadurch ist sichergestellt, dass auf alle Kolben der Stelleinrichtungen die gleiche Kraft einwirkt, und dass nach dem Arretieren der Endposition des Kolbens bei allen Kettenlaufwerken die gleiche Kettenspannung eingestellt ist.

Ein weiterer Vorteil besteht darin, dass die Zylinder untereinander kommunizieren können, so dass beispielsweise eine Druckspitze in einem Zylinder von den drei anderen Zylindern zumindest teilweise ausgeglichen werden kann.

Die parallelgeschalteten Zylinder der Stelleinrichtungen aller Kettenlaufwerke können auch einen gemeinsamen Druckspeicher aufweisen.

Ein Druckspeicher, der beispielsweise teilweise mit Gas gefüllt ist, hat den Vorteil, dass Spannungsspitzen in einzelnen Zylindern elastischer aufgefangen werden können.

Es ist vorzugsweise vorgesehen, dass ein zentrales Druckbegrenzungsventil den Arbeitsdruck für die Zylinder der Stelleinrichtungen aller Kettenlaufwerke zur Einstellung der gewünschten Kettenspannung bereithält. Ein derartiges Druckbegrenzungsventil, das in Strömungsrichtung vor der Sperreinrichtung angeordnet ist, begrenzt den Arbeitsdruck. Dadurch, dass die gleiche Kettenspannung in allen Kettenlaufwerken aufrechterhalten werden kann, ist auch gewährleistet, dass der Kettenverschleiß an allen Kettenlaufwerken gleich ist.

Nach dem erfindungsgemäßen Verfahren ist in vorteilhafter Weise vorgesehen, dass der Achsabstand zwischen den Achsen des Antriebs- und Leitrades vor einer Betriebsphase des Kettenfahrzeuges durch Beaufschlagung einer Kolben-Zylinder-Einheit mit einem vorzugsweise hydraulischen Arbeitsdruck zum Erzeugen einer vorbestimmten und einem gewünschten Durchhang im oberen Trum der Kette entsprechenden Kraft des Kolbens eingestellt wird, wobei die erreichte Endposition des Kolbens der Kolben-Zylinder-Einheit gesperrt wird.

Die Sperrung der Endposition des Kolbens und damit die Fixierung des Abstandes der Achsen des Antriebs- und Leitrades erfolgt beispielsweise beim Erreichen eines Gleichgewichts zwischen der Kraft des Kolbens und der aus der Kettenspannung resultierenden Kraft oder nach Zeitablauf einer vorgesehenen Einwirkzeit der Kolbenkraft oder beim Erreichen eines vorgegebenen Durchhangs.

Als Federelement kann eine progressive Druckfeder verwendet werden, die vorgespannt wird.

Der gegenseitige Abstand der Achsen des Antriebs- und Leitrades sind dadurch an eine aktuelle Längung der Kette angepasst und statisch eingestellt und kann so lange beibehalten werden, bis eine erneute Anpassung an eine aktuelle Längung der Kette erforderlich erscheint.

Vorzugsweise ist vorgesehen, dass das Federelement seriell zu der Kolben-Zylinder-Einheit angeordnet wird, und dass die Position des Kolbens gesperrt wird, wenn die Kolbenkraft der aus der Kettenspannung resultierenden Gegenkraft entspricht.

Im Folgenden wird unter Bezugnahme auf die Zeichnungen ein Ausführungsbeispiel der Erfindung näher erläutert.

Es zeigen:
- Fig. 1: ein Kettenfahrzeug in Form einer Straßenfräsmaschine mit insgesamt vier Kettenlaufwerken,
- Fig. 2: eine schematische Seitenansicht eines Kettenlaufwerkes mit Kettenspanneinrichtung, und
- Fig. 3: einen hydraulischen Schaltplan für die Kettenspanneinrichtung an einem Kettenfahrzeug mit vier Kettenlaufwerken.

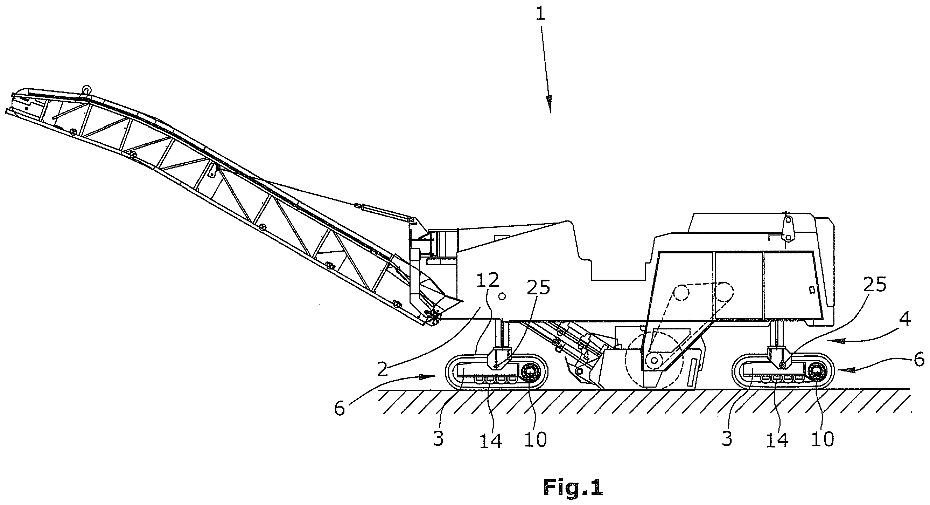

Fig. 1 zeigt eine Straßenfräsmaschine 1 mit einem Maschinenrahmen 2 und einem den Maschinenrahmen 2 tragenden Fahrwerk 4 mit vier Kettenlaufwerken 6. Die Kettenlaufwerke 6 weisen eine endlos umlaufende Kette 12 auf, die mit Bodenplatten aus Kunststoff versehen sein können, um eine Beschädigung des Straßenbelages zu verhindern.

Die Kette 12 läuft endlos um mindestens ein Leitrad 8 und mindestens ein Antriebsrad 10 um, das mit einem vorzugsweise hydraulischen Antrieb 11 versehen ist. Der Maschinenrahmen 2 wird von Laufrollen 14 getragen, die auf der Innenseite der Kette 12 abrollen.

Der gegenseitige Abstand der Achse 20 des Leitrades 8 und der Achse 22 des Antriebsrades 10 ist zur Anpassung an eine aktuelle Länge der Kette 12 mit Hilfe einer Stelleinrichtung 18 einstellbar. Zusätzlich zu der Stelleinrichtung 18 ist ein Federelement 24 vorgesehen, das in Reihe mit der Stelleinrichtung 18 angeordnet ist, wobei das Federelement 24 ausgehend von dem eingestellten Abstand zwischen den Achsen 20,22 eine momentane Verkürzung des Abstandes zwischen den Achsen 20,22 gegen die Federkraft bei einer betriebsbedingten Erhöhung der Kettenspannung zur Vermeidung von Spannungsspitzen in der Kette 12 ermöglicht. Diese Spannungsspitzen können beispielsweise auftreten, wenn das Kettenfahrzeug 1 über Hindernisse fährt.

Das Kettenlaufwerk 6 ist um einen vorzugsweise im wesentlichen mittig angeordneten Pendelbolzen 25 um eine horizontale Achse schwenkbar, um sich an unebene Boden- oder Straßenverhältnisse anpassen zu können. Ein Fahrwerksrahmen 3 des Kettenlaufwerks 6 ist über den Pendelbolzen 25, einer den Pendelbolzen 25 lagernden Konsole 23 und eine Hubsäule 27 mit dem Maschinenrahmen 2 des Kettenfahrzeugs verbunden.

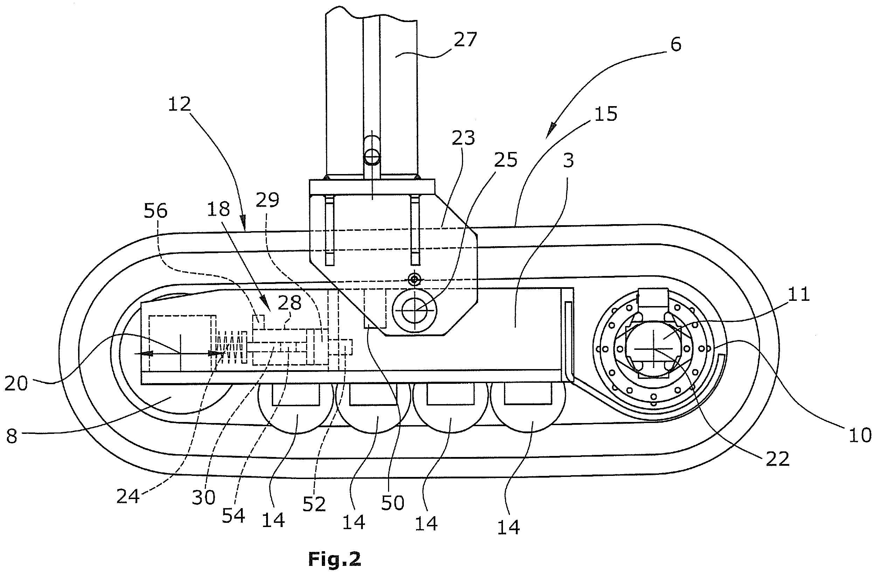

Die Stelleinrichtung 18, sowie das Federelement 24 sind vorzugsweise zwischen dem Pendelbolzen 25 und dem Leitrad 8 angeordnet. Die vorgeschlagene Kombination einer Stelleinrichtung 18 und einem Federelement 24 hat den Vorteil, dass eine kompakte Kettenspanneinrichtung geschaffen werden kann, die auch bei kleinem Achsabstand zwischen den Achsen 20,22 einen geringen Platzbedarf aufweist. Die Anordnung der Stelleinrichtung 18 und des Federelementes 24 ist beispielsweise der Fig. 2 zu entnehmen, wobei die Reihenfolge der Stelleinrichtung 18 und des Federelementes 24 auch umgekehrt werden kann. Die Achse 20 des Leitrades 8 ist linear in Pfeilrichtung verschiebbar an dem Fahrwerksrahmen 3 des Kettenlaufwerks 6 gelagert, so dass bei Vergrößerung des Achsabstandes zwischen den Achsen 20,22 die Kettenspannung der Kette 12 erhöht werden kann und somit eine Anpassung an eine eventuelle Kettenlängung erfolgen kann.

Die Stelleinrichtung 18 weist eine Kolben-Zylinder-Einheit 28 mit einem Kolben 30 auf, der mit einem vorbestimmten Arbeitsdruck beaufschlagbar ist, um eine vorbestimmte Kraft des Kolbens 30 zu erzeugen. Der Arbeitsdruck und die Kraft des Kolbens 30 ist dabei auf eine gewünschte Kettenspannung abgestimmt, die zu einem gewünschten Durchhang der Kette 12 im oberen Trum 15 führt. Bei Beaufschlagung des Zylinders 29 mit dem voreingestellten Arbeitsdruck bewegt sich der Kolben 30 so weit vor, bis die Kraft des Kolbens 30 im Gleichgewicht mit der aus der Kettenspannung resultierenden Gegenkraft des Leitrades 8 ist oder bis die Kraft des Kolbens 30 ausreichend lange auf die Kette einwirken konnte. Hierzu kann die Arretierung des Kolbens 30 nach einem voreingestellten Zeitablauf erfolgen.

Das vorgespannte Federelement 24 kann ausgehend von dem fest eingestellten Abstand der Achsen 20,22 eine Verkürzung des Abstandes zwischen den Achsen ermöglichen, wenn es zu einer in der Regel kurzfristigen betriebsbedingten erheblichen Erhöhung der Kettenspannung kommt.

Zur Vermeidung von Spannungsspitzen in der Kette 12 kann demzufolge das Leitrad 8 gegen die Federkraft des Federelementes 24 in Richtung auf die Stelleinrichtung 18 einfedern.

Hat bei der Beaufschlagung der Kolben-Zylinder-Einheit 28 mit dem Arbeitsdruck der Kolben 30 eine Endposition erreicht, in der die Kraft des Kolbens 30 durch die im wesentlichen gleich hohe Gegenkraft des Leitrades 8 aufgehoben wird, oder ein vorgegebener Durchhang der Kette 12 erreicht ist oder hat die Kraft des Kolbens 30 ausreichend lange auf die Kette 12 einwirken können, kann der Kolben 30 in der erreichten Endposition mit Hilfe einer Sperreinrichtung 34 arretiert werden.

Da die Achse 22 des Antriebsrades 10 letztlich am Fahrwerksrahmen 3 gelagert ist, führt eine Änderung der Position des Kolbens 30 der an dem Fahrwerkrahmen 3 befestigten Stelleinrichtung 18 zu einer entsprechenden Änderung des Achsabstandes zwischen den Achsen 20 und 22.

Die arretierte Endposition des Kolbens 30 kann zu jedem Beginn einer Arbeitsschicht neu eingestellt werden oder auch für mehrere Betriebstage beibehalten werden, wenn keine außergewöhnliche Kettenlängung feststellbar ist.

Eine solche Kettenlängung wäre beispielsweise durch Beobachtung des Durchhangs des oberen Trums 15 der Kette 12 feststellbar.

Gemäß einem bevorzugten Ausführungsbeispiel ist vorgesehen, dass die Zylinder 29 der Stelleinrichtungen 18 der Kettenlaufwerke 6 untereinander verbunden werden, um ein Kommunizieren der Stelleinrichtungen 18 zu ermöglichen. Dadurch kann an den Ketten 12 aller Kettenlaufwerke 6 ein gleichmäßiger Verschleiß erzielt werden.

Die Parallelschaltung aller Zylinder 29 der Kettenlaufwerke 6 bewirkt eine Akkumulatorwirkung.

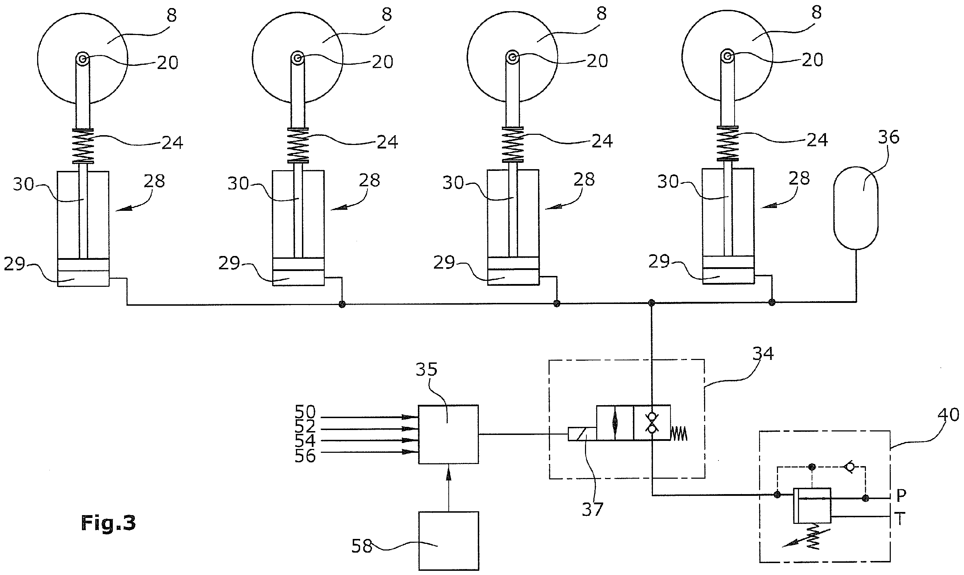

Zusätzlich kann, wie aus Fig. 3 hervorgeht, ein Druckspeicher 36 parallelgeschaltet werden, der als zusätzlicher Akkumulator arbeitet. Mit Hilfe des Druckspeichers 36 kann der Arbeitsdruck in den Zylindern 29 geringfügig dynamisch variieren. Druckspitzen können elastisch aufgefangen werden.

Alternativ ist jeder Zylinder 29 separat geschaltet und kann mit einem eigenen Druckspeicher versehen sein.

Zum Spannen einer oder mehrerer Ketten 12 wird aus dem Hydraulikkreislauf des Kettenfahrzeugs 1 über ein Druckbegrenzungsventil 40 ein vorbestimmter und wählbarer Arbeitsdruck, z.B. 30 bar, zum Beaufschlagen der Zylinder 29 der Kolben-Zylinder-Einheiten 28 bereitgestellt. Der Arbeitsdruck wird durch eine Sperreinrichtung 34 hindurch den jeweiligen Zylindern 29 zugeführt, wobei die aus einem 2/2-Wegeventil bestehende Sperreinrichtung 34 die erreichte Endposition des oder der Kolben 30, die unter dem Arbeitsdruck stehen, durch Rückschlagventile arretiert. Die Sperrung erfolgt, wenn die aufgrund des Arbeitsdrucks wirkende Kraft des Kolbens 30 sich im Gleichgewicht befindet mit der aufgrund der Kettenspannung wirkenden Gegenkraft zwischen den Achsen 20,22 des Antriebs- und Leitrades 8,10 bzw. zwischen dem Leitrad 8 und dem Fahrwerksrahmen 3 oder nach einem voreingestellten Zeitablauf der Krafteinwirkung der Stelleinrichtung 18. Es versteht sich, dass der aufgebrachte Arbeitsdruck an die gewünschte Kettenspannung bzw. an den gewünschten Durchhang der Kette 12 im oberen Trum 15 angepasst ist, und dass das Druckbegrenzungsventil 40 entsprechend eingestellt ist.

Das Erreichen der Endposition des Kolbens 30 kann mit geeigneten Sensoren überwacht oder mit einem Zeitglied gesteuert werden, die die Sperreinrichtung 34 ansteuern.

Mit den Sensoren 50,52,54,56 kann beispielsweise der Druck bzw. die Druckänderung im Zylinder 29 gemessen werden. Es kann auch die Kraft des Kolben 30 oder dessen Wegänderung gemessen werden, um festzustellen, wann der Kolben 30 zum Stillstand kommt, um die Sperreinrichtung 34 z. B. automatisch anzusteuern. Schließlich kann mit einem Abstandsmesser der Abstand zwischen dem oberen Trum 15 und dem Fahrwerksrahmen 3 gemessen werden, um festzustellen, ob ein gewünschter Durchhang erreicht worden ist. Dabei können kapazitive, induktive Sensoren oder Ultraschallsensoren zum Einsatz kommen.

Alternativ kann nach Aufbringung des Arbeitsdruckes durch Öffnung des Sperrventils 34 mit einer einstellbaren oder eingestellten Zeitverzögerung einer Zeitverzögerungsschaltung 58 das Schließen des Sperrventils 34 automatisch veranlasst werden.

Das Sperrventil 34 ist mit einem Hubmagneten 37 versehen, der das Ventil zwischen der Sperr- und Durchgangsstellung schaltet. Der Hubmagnet 37 kann von einer Steuereinrichtung 35 entsprechend angesteuert werden, die alternativ die Steuersignale von unterschiedlichen Sensoren erhalten kann. Ein Abstandssensor 50 kann den Durchhang des oberen Trums 15 gegenüber dem Fahrwerksrahmen 3 feststellen. Ein Drucksensor 52 kann den Druck oder die Druckänderung im Zylinder 29 feststellen. Ein Kraftsensor 54 kann die Kolbenkraft messen und ein Wegsensor 56 kann die Position des Kolbens 30 messen bzw. dessen Stillstand. Ggf. kann die Steuereinrichtung 35 auch eine Kombination der vorgeschlagenen Sensoren zur Steuerung des Hubmagneten 37 verwenden.

Falls ein Druckspeicher 36 parallelgeschaltet ist, wird auch dieser mit dem gewünschten Arbeitsdruck vorgespannt. Vorzugsweise erfolgt die Betätigung der Stelleinrichtungen 18, wenn sich die Straßenbaumaschine 1 auf einem ebenen horizontalen Grund befindet.

Es ist vorteilhaft, wenn sich die Straßenbaumaschine 1 einige Meter, bis wenige zehn Meter, z.B. 30 m, in Geradeausfahrt vorwärts bewegt hat, bevor der Kettenspannvorgang eingeleitet wird.

## Patentansprüche

1. Kettenlaufwerk einer Straßenbaumaschine (1), mit einem Maschinenrahmen (2) und einem den Maschinenrahmen (2) tragenden Fahrwerk (4) mit vorzugsweise mehreren Kettenlaufwerken (6), wobei
- die Kettenlaufwerke (6) eine endlos, um mindestens ein Leitrad (8) und mindestens ein Antriebsrad (10) umlaufende Kette (12) und mehrere auf der Kette (12) abrollende Laufrollen (14) aufweisen, die den Maschinenrahmen (2) tragen, wobei
- auf das Antriebsrad (10) oder vorzugsweise auf das Leitrad (8) eine Stelleinrichtung (18) einwirkt, mit der der gegenseitige Abstand der Achsen (20,22) des Antriebs- und Leitrades (8,10) zur Anpassung an eine aktuelle Längung der Kette (12) einstellbar ist, und wobei
- zusätzlich zu der Stelleinrichtung (18) ein Federelement (24) vorgesehen ist, das ausgehend von dem eingestellten Abstand eine Verkürzung des Abstandes zwischen den Achsen (20,22) des Antriebs- und Leitrades (8,10) gegen die Federkraft bei einer betriebsbedingten Erhöhung der Kettenspannung zur Vermeidung von Spannungsspitzen in der Kette (12) zulässt,
- wobei die Stelleinrichtung (18) aus einer Kolben-Zylinder-Einheit (28) mit einem Kolben (30) besteht, der mit einem vorzugsweise hydraulischen Arbeitsdruck beaufschlagbar ist, um eine vorbestimmte Kraft des Kolbens (30) zu erzeugen, und
- eine Sperreinrichtung (34) beim Erreichen der vorgegebenen Kettenspannung die unter dem anliegenden Arbeitsdruck erreichte Endposition des Kolbens (30) der Kolben-Zylinder-Einheit (28) arretiert,
**dadurch gekennzeichnet,**
**dass** eine Steuereinrichtung (35) zum automatischen Einstellen eines gewünschten Durchhangs der Kette (12) in dem oberen Trum (15) die Sperreinrichtung (34) automatisch in Abhängigkeit von den Steuersignalen eines Abstandssensors (50) für den Abstand zwischen dem oberen Trum (15) und dem Fahrwerksrahmen (3) und/oder eines Wegsensors (56) für die Position des Kolbens (30) in dem Zylinder (29) und/oder eines Drucksensors (52) für den Druck oder die Druckänderung im Zylinder (29) der Stelleinrichtung (18) und/oder eines Kraftsensors (54) für die Kolbenkraft ansteuert.

2. Straßenbaumaschine (1), insbesondere Straßenfräsmaschine, mit
- einem Maschinenrahmen (2) und
- einem den Maschinenrahmen (2) tragenden Fahrwerk (4) mit vorzugsweise mehreren Kettenlaufwerken (6) nach Anspruch 1.

3. Kettenlaufwerk einer Straßenbaumaschine (1) nach Anspruch 1 oder 2, **dadurch gekennzeichnet, dass** die Sperreinrichtung (34) beim Erreichen einer zu der Kraft des Kolbens (30) im wesentlichen gleich hohen Gegenkraft zwischen den Achsen (20,22) des Antriebs- und Leitrades (8,10) oder nach einer vorgegebenen Zeitspanne der Einwirkung der Stelleinrichtung (18) oder nach Erreichen eines vorgegebenen Durchhangs in dem oberen Trum (15) der Kette (12) die erreichte Endposition des Kolbens (30) der Kolben-Zylinder-Einheit (28) unter dem anliegenden Arbeitsdruck arretiert.

4. Kettenlaufwerk einer Straßenbaumaschine (1) nach einem der Ansprüche 1 bis 3, **dadurch gekennzeichnet, dass** das Federelement (24) in Reihe zwischen dem Kolben (30) der Kolben-Zylinder-Einheit (28) und der Achse (20,22) des Antriebs- oder Leitrades (8,10) unter Vorspannung angeordnet ist.

5. Kettenlaufwerk einer Straßenbaumaschine (1) nach einem der Ansprüche 1 bis 4, **dadurch gekennzeichnet, dass** die Stelleinrichtungen (18) aller Kettenlaufwerke (6) mit dem gleichen Arbeitsdruck beaufschlagt sind.

6. Kettenlaufwerk einer Straßenbaumaschine (1) nach einem der Ansprüche 1 bis 5, **dadurch gekennzeichnet, dass** die Stelleinrichtungen (18) aller Kettenlaufwerke (6) mit jeweils einem eigenen Druckspeicher (36) verbunden sind.

7. Kettenlaufwerk einer Straßenbaumaschine (1) nach einem der Ansprüche 1 bis 6, **dadurch gekennzeichnet, dass** die Kolben-Zylinder-Einheiten (28) der Stelleinrichtungen (18) aller Kettenlaufwerke (6) untereinander verbunden sind.

8. Kettenlaufwerk einer Straßenbaumaschine (1) nach Anspruch 7, **dadurch gekennzeichnet, dass** die parallelgeschalteten Kolben-Zylinder-Einheiten (28) der Stelleinrichtungen (18) aller Kettenlaufwerke (6) mit einem gemeinsamen Druckspeicher (36) verbunden sind.

9. Kettenlaufwerk einer Straßenbaumaschine (1) nach einem der Ansprüche 1 bis 8, **dadurch gekennzeichnet, dass** ein zentrales Druckbegrenzungsventil (40) den Arbeitsdruck für die Kolben-Zylinder-Einheit (28) der Stelleinrichtungen (18) aller Kettenlaufwerke zur Einstellung der gewünschten Kettenspannung bereithält.

10. Verfahren zum Spannen einer endlos um mindestens ein Leitrad (8) und mindestens ein Antriebsrad (10) umlaufenden Kette (12) eines Kettenlaufwerkes (6) einer Straßenbaumaschine (1) mit vorzugsweise mehreren Kettenlaufwerken (6), durch
- Einstellen des Abstandes zwischen den Achsen (20,22) des Antriebs- und Leitrades (8,10) zur Anpassung an eine aktuelle Länge der Kette (12),
- dynamisches Begrenzen von betriebsbedingten Spannungsspitzen der Kette (12) mit einem zwischen den Achsen (20,22) des Antriebs- und Leitrades (8,10) wirkenden Federelement (24), und
- das Einstellen des Achsabstandes zwischen den Achsen (20,22) des Antriebs- und Leitrades (8,10) vor einer Betriebsphase durch Beaufschlagung einer Kolben-Zylinder-Einheit (28) mit einem vorzugsweise hydraulischen Arbeitsdruck zum Erzeugen einer vorbestimmten, den Achsabstand vergrößernden Kraft des Kolbens (30) der Kolben-Zylinder-Einheit (28), und
- das Sperren der Position des Kolbens (30) der Kolben-Zylinder-Einheit (28) beim Erreichen einer vorgegebenen Kettenspannung,
**gekennzeichnet durch**
das automatische Einstellen eines gewünschten Durchhangs der Kette (12) in dem oberen Trum (15) durch Ansteuern der Sperreinrichtung (34) mit einer Steuereinrichtung (35) in Abhängigkeit von dem Abstand zwischen dem oberen Trum (15) und dem Fahrwerksrahmen (3) und/oder der Position des Kolbens (30) in dem Zylinder (29) und/oder dem Druck oder die Druckänderung im Zylinder (29) der Stelleinrichtung (18) und/oder der Kolbenkraft.

11. Verfahren nach Anspruch 10, **gekennzeichnet durch** das Sperren der Position des Kolbens (30) der Kolben-Zylinder-Einheit (28) beim Erreichen einer vorgegebenen Kettenspannung resultierenden, zu der Kraft des Kolbens (30) im wesentlichen gleich hohen Gegenkraft zwischen den Achsen (20,22) des Antriebs- und Leitrades (8,10) oder nach Einwirkung der Kolbenkraft des Kolbens (30) über eine vorgegebene Zeitspanne oder beim Erreichen eines vorgegebenen Durchhangs des oberen Trums (15) der Kette (12).

12. Verfahren nach Anspruch 10, **dadurch gekennzeichnet, dass** die Kolben-Zylinder-Einheiten (28) aller Kettenlaufwerke (6) mit dem gleichen Arbeitsdruck beaufschlagt werden.

13. Verfahren nach Anspruch 10 oder 11, **dadurch gekennzeichnet, dass** die Kolben-Zylinder-Einheiten (28) zum Einstellen einer gleichen Kettenspannung in allen Kettenlaufwerken (6) untereinander verbunden werden.

14. Verfahren nach Anspruch 13, **dadurch gekennzeichnet, dass** die parallelgeschalteten Kolben-Zylinder-Einheiten (28) zur Aufrechterhaltung eines gleichen Arbeitsdrucks mit einem gemeinsamen Druckspeicher (36) verbunden werden.

15. Verfahren nach einem der Ansprüche 10 bis 14, **dadurch gekennzeichnet, dass** die Kolben-Zylinder-Einheiten (28) aller Kettenlaufwerke vor dem Sperren der Endposition des Kolbens (30) mit dem Arbeitsdruck über ein zentrales Druckbegrenzungsventil (40) versorgt werden.

## Claims

1. Crawler track unit of a road construction machine (1), comprising a machine frame (2), and a chassis (4) with preferably several crawler track units (6), said chassis (4) carrying the machine frame (2), wherein
- the crawler track units (6) comprise a chain (12) which continuously revolves around at least one guide wheel (8) and at least one drive wheel (10), as well as several track rollers (14) which roll on the chain (12) and carry the machine frame (2), wherein
- an adjustment device (18) acts on the drive wheel (10) or preferably on the guide wheel (8), enabling the reciprocal spacing of the axles (20,22) of the drive wheel and guide wheel (8,10) to be adjusted for adaptation to a current lengthening of the chain (12), and wherein
- in addition to the adjustment device (18), a spring element (24) is provided which allows, using the adjusted spacing as a basis, a shortening of the spacing between the axles (20,22) of the drive wheel and guide wheel (8,10) against the spring force in the event of an operation-related increase of the chain tension to prevent any tension peaks in the chain (12),
- the adjustment device (18) comprises a piston-cylinder unit (28) with a piston (30) to which a preferably hydraulic operating pressure can be applied in order to generate a predetermined force of the piston (30), and
- that, upon reaching the predetermined chain tension, a locking device (34) locks the end position of the piston (30) of the piston-cylinder unit (28) reached under the operating pressure applied,
**characterized in**
**that** a control unit (35) for automatic adjustment of a desired slack of the chain (12) in the upper strand (15) is operative to automatically control the locking device (34) in dependence on the control signals of a distance sensor (50) for the distance between the upper strand (15) and the vehicle frame (3) and/or a position sensor (56) for the position of the piston (30) in the cylinder (29) and/or a pressure sensor (52) for the pressure or the pressure change in the cylinder (29) of the adjustment device (18) and/or a force sensor (54) for the piston force.

2. Road construction machine (1), particularly a road milling machine, comprising
- a machine frame (2) and
- a chassis (4) with preferably several crawler track units (6) according to claim 1, said
chassis (4) carrying the machine frame (2).

3. Crawler track unit of a road construction machine (1) in accordance with claim 1 or 2, **characterized in that** the locking device (34) locks the end position of the piston (30) of the piston-cylinder unit (28) reached under the operating pressure applied upon reaching a counterforce between the axles (20,22) of the drive wheel and guide wheel (8,10) which essentially equals the force of the piston (30), or after a predetermined lapse of time of action of the adjustment device (18), or after reaching a predetermined slack in the upper strand (15) of the chain (12).

4. Crawler track unit of a road construction machine (1) in accordance with one of the claims 1 to 3, **characterized in that** the spring element (24) is arranged in series between the piston (30) of the piston-cylinder unit (28) and the axle (20,22) of the drive wheel or guide wheel (8,10) in a prestressed fashion.

5. Crawler track unit of a road construction machine (1) in accordance with one of the claims 1 to 4, **characterized in that** the same amount of operating pressure is applied to the adjustment devices (18) of all crawler track units (6).

6. Crawler track unit of a road construction machine (1) in accordance with one of the claims 1 to 5, **characterized in that** the adjustment devices (18) of all crawler track units (6) are each connected to an own pressure accumulator (36).

7. Crawler track unit of a road construction machine (1) in accordance with one of the claims 1 to 6, **characterized in that** the piston-cylinder units (28) of the adjustment devices (18) of all crawler track units (6) are interconnected.

8. Crawler track unit of a road construction machine (1) in accordance with claim 7, **characterized in that** the piston-cylinder units (28) of the adjustment devices (18) of all crawler track units (6), which are connected in parallel, are connected to a common pressure accumulator (36).

9. Crawler track unit of a road construction machine (1) in accordance with one of the claims 1 to 8, **characterized in that** a central pressure-limiting valve (40) provides the operating pressure for the piston-cylinder unit (28) of the adjustment devices (18) of all crawler track units for adjustment of the desired chain tension.

10. Method for tensioning a chain (12) of a crawler track unit (6) of a road construction machine (1) with preferably several crawler track units (6), where said chain (12) continuously revolves around at least one guide wheel (8) and at least one drive wheel (10), by means of
- adjustment of the spacing between the axles (20,22) of the drive wheel and guide wheel (8,10) for adaptation to a current length of the chain (12),
- dynamic limitation of operation-related tension peaks of the chain (12) by means of a spring element (24) acting between the axles (20,22) of the drive wheel and guide wheel (8,10), and
- adjusting the axle spacing between the axles (20,22) of the drive wheel and guide wheel (8,10), prior to an operating stage, by applying a preferably hydraulic operating pressure to a piston-cylinder unit (28) to generate a predetermined force of the piston (30) of the piston-cylinder unit (28), which increases the axle spacing, and
- locking the position of the piston (30) of the piston-cylinder unit (28) upon reaching a predetermined chain tension,
**characterized by**
automatic adjustment of a desired slack of the chain (12) in the upper strand (15) by controlling the locking device (34) through a control unit (34) in dependence on the distance between the upper strand (15) and the vehicle frame (3) and/or the position of the piston (30) in the cylinder (29) and/or the pressure or the pressure change in the cylinder (29) of the adjustment device (18) and/or the piston force.

11. Method in accordance with claim 10, **characterized by** locking the position of the piston (30) of the piston-cylinder unit (28) upon reaching a counterforce between the axles (20,22) of the drive wheel and guide wheel (8,10) which results from the predetermined chain tension and which essentially equals the force of the piston (30), or after action by the piston force of the piston (30) over a predetermined time lapse, or upon reaching a predetermined slack in the upper strand (15) of the chain (12).

12. Method in accordance with claim 10, **characterized in that** the same amount of operating pressure is applied to the piston-cylinder units (28) of all crawler track units (6).

13. Method in accordance with claim 10 or 11, **characterized in that** the piston-cylinder units (28) are interconnected for the purpose of adjusting the same amount of chain tension in all crawler track units (6).

14. Method in accordance with claim 13, **characterized in that** the piston-cylinder units (28), which are connected in parallel, are connected to a common pressure accumulator (36) for the purpose of maintaining a same amount of operating pressure.

15. Method in accordance with one of the claims 10 to 14, **characterized in that** the piston-cylinder units (28) of all crawler track units are supplied, prior to locking the end position of the piston (30), with the operating pressure via a central pressure-limiting valve (40).

## Revendications

1. Chenille d'un engin de travaux routiers (1), dotée d'un châssis de machine (2) et d'un train de roulement (4) portant le châssis de machine (2) avec de préférence plusieurs chenilles (6), dans laquelle
- les chenilles (6) comportent une chaîne (12) sans fin, entourant au moins une roue de guidage (8) et au moins une roue motrice (10), et plusieurs galets (14) roulant sur la chaîne (12), lesquels portent le châssis de machine (2), dans laquelle
- un moyen d'actionnement (18) opère sur la roue motrice (10) ou de préférence sur la roue de guidage (8), avec lequel l'écart entre les essieux (20, 22) des roues motrices et de guidage (8, 10) est réglable pour s'adapter à un allongement de la chaîne (12), et dans laquelle
- outre le moyen d'actionnement (18), est prévu un élément de ressort (24), lequel permet, à partir de l'écart fixé, un raccourcissement de l'écart entre les essieux (20, 22) des roues motrices et de guidage (8, 10) contre la force de ressort lors d'une augmentation de la tension de chaîne pendant le fonctionnement afin de réduire les pointes de tension dans la chaîne (12),
- dans laquelle le moyen d'actionnement (18) est constitué d'une unité piston-cylindre (28) dotée d'un piston (30), sur laquelle peut s'exercer une pression de travail de préférence hydraulique, afin d'obtenir une force prédéfinie du piston (30), et
- un moyen de blocage (34) verrouille la position finale du piston (30) de l'unité piston-cylindre (28), atteinte sous la pression de travail appliquée, lorsque la tension de chaîne prédéfinie est atteinte,
**caractérisée en ce que**, afin de régler automatiquement un relâchement souhaité de la chaîne (12) dans le tronçon supérieur (15), un moyen de commande (35) pilote le moyen de blocage (34) automatiquement en fonction des signaux de commande d'un capteur d'écart (50) pour l'écart entre le tronçon supérieur et le châssis de train de roulement (3) et/ou d'un capteur de déplacement (56) pour la position du piston (30) dans le cylindre (29) et/ou d'un capteur de pression (52) pour la pression ou la variation de pression dans le cylindre (29) du moyen d'actionnement (18) et/ou d'un capteur de force (54) pour la force de piston.

2. Engin de travaux routiers (1), en particulier fraiseuse routière, doté
- d'un châssis de machine (2) et
- d'un train de roulement (4) portant le châssis de machine (2) avec de préférence plusieurs chenilles (6) selon la revendication 1.

3. Chenille d'un engin de travaux routiers (1) selon la revendication 1 ou 2, **caractérisée en ce que** le moyen de blocage (34) verrouille l'action du moyen d'actionnement (18) lorsqu'une force antagoniste entre les essieux (20, 22) des roues motrice et de guidage (8, 10) essentiellement égale à la force du piston (30) est atteinte ou après un intervalle de temps prédéfini ou verrouille la position finale du piston (30) de l'unité piston-cylindre (28), atteinte sous la pression de travail appliquée, lorsqu'un relâchement prédéfini est atteint dans le tronçon supérieur (15) de la chaîne (12).

4. Chenille d'un engin de travaux routiers (1) selon l'une des revendications 1 à 3, **caractérisée en ce que** l'élément de ressort (24) est agencé, sous précontrainte, en ligne entre le piston (30) de l'unité piston-cylindre (28) et l'essieu (20, 22) de la roue motrice ou de guidage (8, 10).

5. Chenille d'un engin de travaux routiers (1) selon l'une des revendications 1 à 4, **caractérisée en ce que** la même force de travail est appliquée sur les moyens d'actionnement (18) de toutes les chenilles (6).

6. Chenille d'un engin de travaux routiers (1) selon l'une des revendications 1 à 5, **caractérisée en ce que** les moyens d'actionnement (18) de toutes les chenilles (6) sont reliés respectivement à un accumulateur de pression (36) propre.

7. Chenille d'un engin de travaux routiers (1) selon l'une des revendications 1 à 6, **caractérisée en ce que** les unités piston-cylindre (28) des moyens d'actionnement (18) de toutes les chenilles (6) sont reliées l'une à l'autre.

8. Chenille d'un engin de travaux routiers (1) selon la revendication 7, **caractérisée en ce que** les unités piston-cylindre (28), montées en parallèle, des moyens d'actionnement (18) de toutes les chenilles (6) sont reliées à un accumulateur de pression (36) commun.

9. Chenille d'un engin de travaux routiers (1) selon l'une des revendications 1 à 8, **caractérisée en ce qu'**une soupape de limitation de pression centrale (40) applique la pression de travail pour les unités piston-cylindre (28) des moyens d'actionnement (18) de toutes les chenilles (6) afin de régler la tension de chaîne souhaitée.

10. Procédé de tension d'une chaîne (12) sans fin, entourant au moins une roue de guidage (8) et au moins une roue motrice (10), d'une chenille (6) d'un engin de chantier (1) avec de préférence plusieurs chenilles (6), par
- réglage d'un écart entre les essieux (20, 22) des roues motrices et de guidage (8, 10) pour adaptation à une longueur actuelle de la chaîne (12),
- limitation dynamique des pointes de tension dans la chaîne (12) pendant le fonctionnement avec un élément de ressort (24) opérant entre les essieux (20, 22) des roues motrices et de guidage (8, 10), et
- le réglage de l'écart d'essieu entre les essieux (20, 22) des roues motrices et de guidage (8, 10) avant une phase de fonctionnement par application sur une unité piston-cylindre (28) d'une force de travail, de préférence hydraulique, afin d'obtenir une force prédéfinie du piston (30) de l'unité piston-cylindre (28) agrandissant l'écart d'essieu,
- le blocage de la position du piston (30) de l'unité piston-cylindre (28) lorsqu'une tension de chaîne prédéfinie est atteinte,
**caractérisé par** le réglage automatique d'un relâchement souhaité de la chaîne (12) dans le tronçon supérieur (15) par pilotage du moyen de blocage (34) avec un moyen de commande (35) en fonction de l'écart entre le tronçon supérieur (15) et le châssis de train de roulement (3) et/ou de la position du piston (30) dans le cylindre (29) et/ou de la pression ou de la variation de pression dans le cylindre (29) du moyen d'actionnement (18) et/ou de la force de piston.

11. Procédé selon la revendication 10, **caractérisé par** le blocage de la position du piston (30) de l'unité piston-cylindre (28) lorsqu'une force antagoniste entre les essieux (20, 22) des roues motrice et de guidage (8, 10), résultant d'une tension de chaîne prédéfinie, essentiellement égale à la force du piston (30) est atteinte ou après action de la force de piston du piston (30) sur un intervalle de temps prédéfini ou lorsqu'un relâchement prédéfini est atteint dans le tronçon supérieur (15) de la chaîne (12).

12. Procédé selon la revendication 10, **caractérisé en ce que** la même force de travail est appliquée sur les unités piston-cylindre (28) de toutes les chenilles (6).

13. Procédé selon la revendication 10 ou 11, **caractérisé en ce que** les unités piston-cylindre (28) sont reliées l'une à l'autre afin d'ajuster une tension de chaîne égale dans toutes les chenilles (6).

14. Procédé selon la revendication 13, **caractérisé en ce que** les unités piston-cylindre (28) montées en parallèle sont reliées à un accumulateur de pression (36) commun afin de maintenir une même pression de travail.

15. Procédé selon l'une des revendications 10 à 14, **caractérisé en ce que** les unités piston-cylindre (28) de toutes les chenilles (6) sont pourvues de la pression de travail par le biais d'une soupape de limitation pression centrale (40) avant le blocage de la position finale du piston (30).
